# EUROPEAN PATENT APPLICATION

(11) **EP 3 124 547 A1**
(43) Date of publication of application: **01.02.2017**
(21) Application number: 15770052.7
(22) Date of filing: 18.03.2015
(51) Int. Cl.: C08L 101/00, C08J 5/00, C08L 27/16, C08L 53/00, C08L 55/00

(54) **RESIN COMPOSITION AND MOLDED BODY FORMED FROM RESIN COMPOSITION**

(30) Priority: 25.03.2014 JP 2014061682
(71) Applicant: Mitsubishi Rayon Co., Ltd., Tokyo 100-8253 (JP)
(72) Inventor: IKAWA Masashi, Otake-shi Hiroshima 739-0693 (JP); HOSOKAWA Hiroshi, Otake-shi Hiroshima 739-0693 (JP); OKAMOTO Eiko, Otake-shi Hiroshima 739-0693 (JP); FUJIYAMA Kousuke, Toyama-shi Toyama 931-8601 (JP)
(74) Representative: TBK
(86) International application number: PCT/JP2015/058111
(87) International publication number: WO 2015/146752

(57) **Abstract**

A resin composition which contains from 5% by mass to 65% by mass (inclusive) of a polymer (X) described below and from 35% by mass to 95% by mass (inclusive) of a polymer (Y) described below. Alternatively, a resin composition which contains more than 65% by mass but 85% by mass or less of a polymer (X) described below and 15% by mass or more but less than 35% by mass of a polymer (Y) described below, wherein a domain (y1) described below or a domain (y2) described below comprises a macromonomer unit. Polymer (X): a vinylidene fluoride resin Polymer (Y): a copolymer having a domain (y1) that is compatible with the polymer (X) and a domain (y2) that is incompatible with the polymer (X)

## Description

### TECHNICAL FIELD

The present invention relates to a resin composition and a molded body formed from the resin composition.

This application claims priority based on Japanese Patent Application No. 2014-061682 filed on March 25, 2014, and the contents of which are incorporated herein by reference.

### BACKGROUND ART

A fluororesin is a crystalline resin which exhibits excellent properties such as weather resistance, flame retardancy, heat resistance, soil resistance, smoothness, or chemical resistance, and it is particularly preferred as a material of a product which is exposed to an outside environment. Among the fluororesins, in particular, a vinylidene fluoride resin (hereinbelow, described as "PVDF") has a large difference between the melting point and decomposition temperature, and thus it is a thermoplastic resin suitable for molding processing.

However, as the crystals of PVDF can easily grow to a size that is larger than the wavelength of visible light, part of visible light is scattered by them, and thus the transparency is low. For such reasons, it is difficult to apply PVDF to a transparent material.

Among the thermoplastic resins, the acrylic resin represented by polymethyl methacrylate (PMMA) is a non-crystalline resin which is compatible with a vinylidene fluoride resin. The acrylic resin has excellent transparency and excellent weather resistance, and thus the acrylic resin is preferred as a material of a product which is exposed to an outside environment.

However, since the acrylic resin has poor heat resistance, low water absorption property, flexibility, impact resistance or the like, there are cases in which use of the acrylic resin is limited.

Until now, lots of studies have been made to take, by utilizing the compatibility between a vinylidene fluoride resin and an acrylic resin, advantages of each based on a polymer blend of them.

For example, according to Patent Literature 1, it is described that a transparent resin can be obtained while maintaining the crystallinity of a vinylidene fluoride resin if a vinylidene fluoride resin and an acrylic resin having good compatibility with it are admixed with each other at a pre-determined ratio.

However, this method is not related with micronization of crystal size, and the transparency can be maintained only with a film having a thickness of one hundred and several tens of micrometers at most. In the case of a molded body like a thicker film and sheet, the transparency is still insufficient.

Furthermore, as described in Patent Literature 2, also known is an example in which a block polymer consisting of a block chain compatible with a vinylidene fluoride resin and a soft block chain and a vinylidene fluoride resin are blended to modify the flexibility or impact resistance of a vinylidene fluoride resin.

Furthermore, in Patent Literature 3, by using an ABC type triblock polymer having a block chain compatible with a vinylidene fluoride resin, a balance between the heat distortion temperature and impact-related property of a crystalline resin is achieved.

In Patent Literature 2 and Patent Literature 3, an acrylic resin is used as a block compatible with the vinylidene fluoride resin.

However, with regard to a blend of those block polymer and vinylidene fuoride resin, although there are many examples for improving mechanical · thermal properties of a vinylidene fluoride resin by introducing domains with different chemical properties, they are not an example in which the physical properties are modified based on control of crystal size. In Example 1 of Patent Literature 3, there is a description slightly indicating that a transparent outer appearance can be obtained by mixing a block copolymer with a vinylidene fluoride resin. However, based on the result of shape observation using a transmission electron microscope, it is clearly described that the matrix is a block mixture of PVDF and PMMA. For such reasons, a skilled person in the art can easily presume that the transparency is caused not by the micronization of crystal size but by a decrease in crystallinity itself.

Furthermore, the blend of an acrylic resin and a vinylidene fluoride resin is just a case that is related to modification of a vinylidene fluoride resin, and a case for having modification by adding a small amount of a vinylidene fluoride resin to an acrylic resin is not known.

### CITATION LIST

### PATENT DOCUMENTS

- Patent Document 1:: WO 2011/142453 A

- Patent Document 2:: JP 63-308055 A
- Patent Document 3:: JP 2001-525474 W

### DISCLOSURE OF INVENTION

### PROBLEM TO BE SOLVED BY THE INVENTION

An object of the present invention is to conveniently control the physical properties of a resin composition by blending a crystalline resin and a non-crystalline resin.

Another object of the present invention is to provide, by using a relatively inexpensive and convenient method, a resin composition having both the crystallinity and high transparency based on control of crystal size of a crystalline resin.

Another object of the present invention is to provide a resin composition with excellent impact resistance by conveniently controlling the crystallization rate.

### MEANS TO SOLVE THE PROBLEMS

The present invention has following aspects.
[1] A resin composition which contains 5% by mass or more and 65% by mass or less of a polymer X described below and 35% by mass or more and 95% by mass or less of a polymer Y described below.
   Polymer X: a vinylidene fluoride resin
   Polymer Y: a copolymer having a domain (y1) which is compatible with the polymer X and a domain (y2) which is incompatible with the polymer X
[2] The resin composition described in [1], in which melt mass flow rate measured at temperature of and a load of 5 kg has a discrepancy of 4 g/10 minutes or more compared to melt mass flow rate of a resin composition which consists of 100% by mass of the polymer Y
[3] The resin composition described in [1] or [2], in which a crystallization peak is observed when cooling is performed from 200°C to 30°C at a temperature lowering rate of 10°C/minute by using a differential scanning calorimeter.
[4] The resin composition described in any one of [1] to [3], in which crystal fusion enthalpy measured by a differential scanning calorimeter is 10 J/g or more and 35 J/g or less.
[5] The resin composition described in any one of [1] to [4], in which the polymer Y is a copolymer which contains 1% by mass or more and 50% by mass or less of the domain (y1).
[6] The resin composition described in any one of [1] to [5], in which the domain (y1) or the domain (y2) comprises a macromonomer unit.
[7] The resin composition described in [6], in which the macromonomer unit comprises a methyl methacrylate unit.
[8] The resin composition described in any one of [1] to [5], in which the polymer Y is a block polymer having the domain (y1) and the domain (y2).
[9] The resin composition described in [8], in which the domain (y1) consists of a methyl methacrylate unit.
[10] The resin composition described in [8] or [9], in which the mass average molecular weight of the domain (y1) is 12000 or less.
[11] The resin composition described in any one of [8] to [10], in which the block polymer is an ABA triblock copolymer.
[12] A molded body which is obtained by molding the resin composition described in any one of [1] to [11] and satisfies at least one of the following condition (i) and condition (ii).
   Condition (i): total light transmittance is 65% or more when a molded body is prepared to have a thickness of 3 mm.
   Condition (ii): haze is 10% or less when a molded body is prepared to have a thickness of 400 µm.
[13] A resin composition which contains more than 65% by mass but 85% by mass or less of a polymer X described below and 15% by mass or more but less than 35% by mass of a polymer Y described below, in which a domain (y1) described below or a domain (y2) described below comprises a macromonomer unit.
   Polymer X: a vinylidene fluoride resin
   Polymer Y: a copolymer having a domain (y1) which is compatible with the polymer X and a domain (y2) which is incompatible with the polymer X
[14] The resin composition described in [13], in which a crystallization peak is observed at 125°C or higher when cooling is performed from 200°C at a temperature lowering rate of 10°C/minute by using a differential scanning calorimeter.
[15] The resin composition described in [13] or [14], in which the macromonomer unit comprises a methyl methacrylate unit.
[16] The resin composition described in any one of [13] to [15], in which the polymer Y is a copolymer which contains 1% by mass or more and 50% by mass or less of the domain (y1).
[17] A molded body which is obtained by molding the resin composition described in any one of [13] to [16].

### EFFECT OF THE INVENTION

According to the present invention, physical properties of a resin composition can be conveniently controlled by blending a crystalline resin with a non-crystalline resin.

Furthermore, the resin composition of the first aspect of the present invention has both the crystallinity and high transparency.

Furthermore, the resin composition of the second aspect of the present invention exhibits excellent dynamic properties like impact resistance as it has fast crystallization rate and micronized crystals.

Furthermore, the molded body obtained by molding the resin composition of the first aspect or the second aspect of the present invention is useful in that it can be produced conveniently at relatively low cost and has excellent chemical properties.

### BRIEF DESCRIPTION OF DRAWINGS

Fig. 1 is a graph illustrating the result of measuring melt mass flow rates of Example 1, Example 2, and Comparative Example 1;
Fig. 2 is a graph illustrating the result of dynamic viscoelasticity test measurement of a molded body of Example 3 and a molded body of the copolymer (Y-1) of Example 3;
Fig. 3A is an image of polarized light microscopy of a molded body of Example 4 which is obtained after melting followed by recrystallization;
Fig. 3B is an image of polarized light microscopy of a molded body of Example 5 which is obtained after melting followed by recrystallization; and
Fig. 3C is an image of polarized light microscopy of a molded body of Comparative Example 3 which is obtained after melting followed by recrystallization.

### EMBODIMENTS FOR CARRYING OUT THE INVENTION

### <Polymer X>

The polymer X used in the present invention is a vinylidene fluoride resin.

Examples of the polymer X include a homopolymer of vinylidene fluoride and a copolymer which contains 70% by mass or more of a vinylidene fluoride unit. As the content of vinylidene fluoride unit increases, higher crystallinity is obtained, and thus desirable.

When the polymer X is a copolymer, examples of a monomer to be copolymerized with vinylidene fluoride include hexafluoropropylene and tetrafluoroethylene.

As the polymerization method for polymerizing a vinylidene fluoride resin which is used as the polymer X, a known polymerization method such as suspension polymerization or emulsion polymerization can be used.

Furthermore, a vinylidene fluoride resin having high crystal melting point is preferred as the polymer X. Meanwhile, the crystal melting point described in the present invention indicates a melt peak temperature which is measured by the method described in JIS K7121, 3.(2).

The crystal melting point of the polymer X is preferably 150°C or higher, and more preferably 160°C or higher. The upper limit of the crystal melting point is 170°C or so, which is the same as the crystal melting point of polyvinylidene fluoride.

The mass average molecular weight of the polymer X is, from the viewpoint of easily obtaining the melt viscosity suitable for molding processing, preferably 50,000 to 600,000, and more preferably 100,000 and 500,000.

Herein, the mass average molecular weight can be measured by using gel permeation chromatography (GPC). For example, by using a solvent such as tetrahydrofuran or water as an eluent, it can be obtained as molecular weight that is calibrated against polymethyl methacrylate standard.

The polymer X may be used either singly or in combination of 2 or more types.

Examples of the polymer X which is industrially obtainable include Kynar 720, Kynar 710, and Kynar 740 manufactured by Arkema; KF 850 manufactured by KUREHA CORPORATION, and Solef 6008, 6010 manufactured by Solvay Specialty Polymers.

### <Polymer Y>

The polymer V which is used in the present invention is a copolymer having a domain (y1) which is compatible with the polymer X (hereinbelow, described as the "domain (y1)") and a domain (y2) which is incompatible with the polymer X (hereinbelow, described as the "domain (y2)").

As described in the present invention, the term "compatible" indicates a case in which a single glass transition temperature (Tg) is observed from a molded body formed by blending and molding heterogeneous polymers (hereinbelow, described as a "blend molded body"). Furthermore, the term "incompatible" indicates a case in which plural Tgs are observed from a blend molded body. Meanwhile, the term "heterogeneous polymers" means polymers with different composition.

Furthermore, as described in the present invention, the term "domain" indicates a single phase for forming a phase separation structure. When a blend molded body has a phase separation structure, Tgs derived from each domain are observed.

Meanwhile, there may be a case in which determination of compatibility and incompatibility cannot be easily made based on the number of Tg only. For example, when Tg derived from a domain that is obtained after compatibilzation of the domain (y1) and the polymer X has the same temperature as Tg of the domain consisting of the domain (y2), the blend molded body appears to have a single Tg. For such reasons, the compatibility and incompatibility needs to be determined by modifying the blend ratio or the like.

As for the polymer Y, any polymer is acceptable as long as it can form both the domain (y1) and the domain (y2). Examples thereof include a copolymer obtained by polymerization using a macromonomer (hereinbelow, described as "macromonomer copolymer"), a graft copolymer, a block polymer (diblock polymer, triblock polymer, or the like), and a mixture thereof. From the viewpoint of the productivity, the macromonomer copolymer is preferable.

Details of the method for polymerizing a macromonomer are described later. However, from the viewpoint of the double bond introduction ratio or easiness of synthesis, a catalytic chain transfer polymerization (CCTP) method is preferable.

When the polymer Y is a macromonomer copolymer, the domain (y1) or the domain (y2) comprises a macromonomer unit. In particular, from the viewpoint of having convenient control of the domain size of the domain (y1) or the phase separation structure of the polymer Y, it is preferable that the domain (y1) comprises a macromonomer unit.

It is preferable to have a phase separation when molding is performed with the polymer Y only. When the polymer Y is blended with the polymer X, the polymer X is compatible only with the domain (y1), and crystallization occurs near the domain (y1) at the time of cooling.

Regarding the phase separation structure of the polymer Y, the domain size is preferably as small as possible. As the crystal micronization may occur easily, both the crystallinity and transparency, can be conveniently obtained. Furthermore, it is unlikely to have a decrease in optical performance which is caused by a difference in refractive index between domains of a phase. Size of each domain is preferably 500 nm or less, more preferably 300 nm or less, and even more preferably 100 nm or less. When the domain size is 500 nm or less, scattering of light with wavelength in visible light range does not easily occur so that high transparency is obtained. Lower limit of the size of each domain is 20 nm or so.

Examples of the phase separation structure of the polymer Y only include a sea-island structure, a cylinder structure, a co-continuous structure, and a lamellar structure. Various physical properties of a molded body are determined by the phase separation structure that is obtained after blending with the polymer X.

The mass average molecular weight of the polymer Y is, to have both the dynamic strength and molding property, preferably 40,000 or more and 1,000,000 or less, more preferably 50,000 or more and 750,000 or less, and even more preferably 50,000 or more and 500,000 or less.

The polymer Y preferably contains 1% by mass or more and 50% by mass or less of the domain (y1).By containing 1% by mass or more and 50% by mass or less of the domain (y1), it is easy for the polymer Y to have partial compatibility with the polymer X. Because the crystallization of the polymer X occurs near the domain (y1), the crystals may easily undergo micronization based on spatial restriction of a phase separation structure.

In particular, when the domain (y1) is present at 1% by mass or more in the polymer Y, it becomes easier to have partial compatibilization of the polymer X and the polymer Y Furthermore, when the domain (y1) is present at 50% by mass or less in the polymer Y, the phase consisting of the polymer X with the domain (y1) has an island or a co-continuous phase separation structure at the time of blending the polymer X and the polymer Y, and thus it is easy to have crystal micronization.

The polymer Y preferably contains the domain (y2) in an amount of 50% by mass or more and 99% by mass or less. By containing the domain (y2) in an amount of 50% by mass or more and 99% by mass or less, a phase separation structure can be maintained even after blending with the polymer X.

In particular, when the domain (y2) is present at 50% by mass or less in the polymer Y, the phase consisting of the polymer X and the domain (y1) has an island or a co-continuous phase separation structure at the time of blending the polymer X with the polymer V and thus it is easy to have crystal micronization. Furthermore, when the domain (y2) is present at 99% by mass or less, it is easy to have partial compatibility between the polymer X and the polymer Y.

Examples of the polymer for constituting the domain (y1) include a polymer which contains, in 100% by mass of the domain (y1), 60% by mass or more of a segment compatible with the polymer X. From the viewpoint of having sufficient compatibility with the polymer X, the content ratio of a segment compatible with the polymer X is preferably 70% by mass or more, more preferably 80% by mass or more, and even more preferably 90% by mass or more.

Examples of the segment which is compatible with the polymer X include a polymer which comprises a monomer unit such as methyl (meth)acrylate, ethyl (meth)acrylate, vinyl acetate, or vinyl methyl ketone.

The polymer comprising those monomer units has good compatibility with the polymer X, and thus preferred as a segment for constituting the domain (y1). Among them, from the viewpoint of the compatibility, a polymer comprising a methyl methacrylate unit is preferable.

When the domain (y1) comprises a macromonomer unit, for example, the macromonomer unit preferably comprises a methyl methacrylate unit, from the viewpoint of the compatibility.

Furthermore, when the polymer Y is a block polymer, the domain (y1) preferably consists of a methyl methacrylate unit.

As a means for introducing the domain (y1) to the polymer Y, it is preferable to use a macromonomer comprising the above monomer unit, from the viewpoint of having the introduction by a convenient step. By using a macromonomer and controlling the molecular weight of a macromonomer, size of the domain (y1) or the phase separation structure of the polymer V can be conveniently controlled.

The mass average molecular weight of the macromonomer is preferably 70,000 or less. When the mass average molecular weight of the macromonomer is 70,000 or less, it can be easily dissolved in a medium at the time of polymerizing the polymer Y The mass average molecular weight of the macromonomer is preferably 5000 or more. When the mass average molecular weight of the macromonomer is 5000 or more, the step for introducing the macromonomer to the polymer Y is shortened so that the productivity can be maintained at favorable level.

In the domain (y1), the above monomer unit may be contained either singly or in combination of two or more types.

Herein, the "(meth)acrylate" means "acrylate" or "methacrylate."

When a domain containing the polymer X becomes a matrix at the time of blending the polymer X with the polymer Y, crystal size of the polymer X may not be micronized depending on the case. Thus, it is preferable to have a smaller molecular weight of the domain (y1).The mass average molecular weight of the polymer for constituting the domain (y1) is preferably 70,000 or less, more preferably 60,000 or less, and even more preferably 50,000 or less. The lower limit of the mass overage molecular weight of the polymer for constituting the domain (y1) is 5000 or so.

In particular, for a case in which the polymer Y is a block polymer, the mass average molecular weight of the domain (y1) is preferably 12,000 or less. As the mass average molecular weight of the domain (y1) is 12,000 or less, the crystallization rate of the polymer X becomes sufficiently fast at the time of blending with the polymer X, and it is advantageous to have both the crystallinity and transparency. The lower limit of the mass average molecular weight of the domain (y1) is 5000 or so from the viewpoint of ensuring the compatibility between the polymer X and the polymer Y

Examples of the domain (y2) include those containing 50% by mass or more of a segment which is incompatible with the polymer X. From the viewpoint of ensuring sufficient incompatibility with the polymer X, content of a segment which is incompatible with the polymer X is preferably 60% by mass or more, more preferably 70% by mass or more, and even more preferably 80% by mass or more.

Examples of the segment for constituting the domain (y2) include a polymer consisting of a monomer unit including alkyl (meth)acrylate such as n-propyl (meth)acrylate, i-propyl (meth)acrylate, n-butyl (meth)acrylate, i-butyl (meth)acrylate, t-butyl (meth)acrylate, n-pentyl (meth)acrylate, n-hexyl (meth)acrylate, cyclohexyl (meth)acrylate, n-octyl (meth)acrylate, 2-ethylhexyl (meth)acrylate, dodecyl (meth)acrylate, stearyl (meth)acrylate, isobornyl (meth)acrylate, 2-hydroxyethyl (meth)acrylate, or benzyl (meth)acrylate; an aromatic vinyl monomer such as styrene, α-methyl styrene, p-methyl styrene, o-methyl styrene, or t-butyl styrene; a vinyl cyanide monomer such as acrylonitrile or methacrylonitrile; a monomer comprising glycidyl group such as glycidyl (meth)acrylate; a vinyl carboxylate monomer such as vinyl butyrate; an olefinic monomer such as ethylene, propylene, or isobutylene; a diene monomer such as butadiene or isoprene; or unsaturated carboxylic acid such as maleic acid or maleic anhydride.

The polymer for constituting the domain (y2) may contain ether one type or 2 or more types of the above monomer unit.

The domain (y2) may comprise a monomer unit which is compatible with the polymer X, but it is necessary that the domain (y1) is incompatible with the domain (y2). For such reasons, the amount of a monomer unit which is compatible with the polymer X is preferably as low as possible. In 100% by mass of the domain (y2), it is preferably less than 50% by mass, more preferably 40% by mass or less, even more preferably 20% by mass or less, and particularly preferably 10% by mass or less.

The monomer unit of the polymer for constituting the domain (y2) can be selected depending on the purpose. For example, if it is desired to provide a resin composition with flexibility, a vinyl monomer unit having low polymer Tg like n-butyl acrylate can be selected. Furthermore, if it is desired to provide a resin composition with heat resistance, a vinyl monomer unit having high polymer Tg like α-methyl styrene can be selected.

As described above, the polymer Y has the domain (y1) and the domain (y2).

As a method for producing the polymer Y, a known method such as living radical polymerization including ATRP, anionic polymerization, or polymerization using macromonomer can be used. Among them, from the viewpoint of having excellent productivity in terms of polymerization rate, number of steps, or the like, a polymerization method using macromonomer is preferable. From the viewpoint of having environmental suitability by not requiring an organic solvent, suspension polymerization using macromonomer is more preferable.

As for the macromonomer, a commercially available product may be used or it may be produced from a monomer with a known method. Examples of the method for producing a macromonomer include a production method using cobalt chain transfer agent, a method in which α substituted unsaturated compound such as α-bromomethyl styrene is used as a chain transfer agent, a method for chemically bonding a polymerizable group, and a method of using thermolysis.

Hereinbelow, a method for obtaining the polymer Y based on suspension polymerization in which a macromonomer is used as a monomer for constituting the domain (y1) is described in detail. However, obtaining the polymer Y by other method is also within the present invention.

A macromonomer as the monomer for constituting the domain (y1) and the domain (y2) are admixed with each other and a radical polymerization initiator is added to the resulting mixture to have the polymerization, and thus the polymer (Y) is obtained accordingly.

When the monomer for constituting the domain (y1) and the monomer for constituting the domain (y2) are admixed with each other, it is preferable to have heating. The heating temperature at the time of mixing is preferably 30 to 90°C. If the heating temperature is 30°C or higher, the macromonomer for constituting the domain (y1) can dissolve more easily, and if the heating temperature is 90°C or lower, volatilization of a monomer mixture can be suppressed. The lower limit of the heating temperature is more preferably 35°C or higher. The upper limit of the heating temperature is more preferably 75°C or lower.

As for the timing for adding a radical polymerization initiator for a case in which a radical polymerization initiator is used for producing the polymer Y, it is preferable to add the initiator after mixing an entire amount of the monomer.

The temperature at the time of adding a radical polymerization initiator also varies depending on the radical polymerization initiator to be used. However, it is preferably 0°C or higher, and it is preferably a temperature which is lower by 15°C or more compared to the 10 hour half-life temperature intrinsic to the radical polymerization initiator. If the temperature at the time of adding a radical polymerization initiator is 0°C or higher, solubility of the radical polymerization initiator in the monomer is improved. Furthermore, if the temperature at the time of adding a radical polymerization initiator is lower by 15°C or more compared to the 10 hour half-life temperature intrinsic to the radical polymerization initiator, stable polymerization can be performed. Meanwhile, because the 10 hour half-life temperature of a commercially available radical initiator is always 30°C or higher, there is no case in which "it is lower by 15°C or more compared to the 10 hour half-life temperature" and "0°C or higher" are contradictory to each other.

Examples of the radical polymerization initiator may include organic peroxide and an azo compound.

Examples of the organic peroxide may include 2,4-dichlorobenzoyl peroxide, t-butyl peroxypivalate, o-methylbenzoyl peroxide, bis-3,5,5-trimethylhexanoyl peroxide, octanoyl peroxide, t-butyl peroxy-2-ethylhexanoate, cyclohexanone peroxide, benzoyl peroxide, methyl ethyl ketone peroxide, dicumyl peroxide, lauroyl peroxide, diisopropylbenzene hydroperoxide, t-butyl hydroperoxide, and di-t-butyl peroxide.

Examples of the azo compound may include 2,2'-azobisisobutyronitrile, 2,2'-azobis(2-methylbutyronitrile), 2,2'-azobis(2,4-dimethylvaleronitrile), and 2,2'-azobis(2,4-dimethyl-4-methoxyvaleronitrile).

Among them, from the viewpoint of easy availability, benzoyl peroxide, 2,2'-azobisisobutyronitrile, 2,2'-azobis(2-methylbutyronitrile), 2,2'-azobis(2,4-dimethylvaleronitrile) and 2,2'-azobis(2,4-dimethyl-4-methoxyvaleronitrile) are preferred.

The radical polymerization initiator may be used either singly or in combination of two or more kinds thereof.

From the viewpoint of controlling heat generated by polymerization, the addition amount of the radical polymerization initiator is preferably 0.0001 to 10 parts by mass relative to 100 parts by mass of the total amount of monomer including macromonomer.

The polymerization temperature for suspension polymerization is 50 to 120°C.

The polymer V obtained by the production method described above can be easily handled as beads after it is collected from a solvent and dried.

Meanwhile, from the viewpoint of easy polymerization, it is preferable that the polymerization be carried out after diluting the reaction solution with a dispersion medium. As for the dispersion medium, a known medium may be used.

In addition, it is possible to prepare the polymer Y as a block polymer, for example, a triblock polymer. As a method for producing the polymer Y as a triblock polymer, a known controlled polymerization such as living radical polymerization, living anion polymerization, or the like may be used. In particular, from the viewpoint of performing the production at industrially common conditions, the living radical polymerization is preferable. Examples of the living radical polymerization include ATRP method, a TEMPO method, and a RAFT method.

The polymer Y may have any structure as long as it contains the domain (y1) which is compatible with the polymer X and the domain (y2) which is incompatible with the polymer X. However, from the viewpoint of controlling various phase separation structures like lamellar structure and sea-island structure based on the length of polymer chain constituting each domains, am ABA triblock copolymer is preferable.

Herein, it is sufficient that any one of the block A and the block B is compatible with the polymer X, and the compatibility of the block A and the block B for the polymer X may be varied depending on the purpose.

Hereinbelow, a method for obtaining the polymer Y as a triblock polymer by RAFT method is described in detail, for example. However, obtaining the polymer Y as a block polymer by other method is also within the present invention.

As a method for producing a triblock polymer by RAFT method, a production method including a step for synthesizing the first block A, a step for synthesizing the block B, and a step for synthesizing the second block A can be mentioned.

With regard to the synthesis method of each step, it is sufficient to have a step in which a monomer for constituting the domain (y1) compatible with the polymer X or the domain (y2) which is compatible with the polymer X is dissolved in a solvent in the presence of a chain transfer agent and polymerization is carried out by using a polymerization initiator, and the method can be suitably selected depending on the purpose.

As for the monomer for constituting the domain (y1), it is preferable to use methyl methacrylate.

When a chain transfer agent is used for the step for synthesizing the first block A, a chain transfer residue remains at the terminal of a polymer which is obtained by the step for synthesizing the first block A. As such, it is not necessary to add a chain transfer agent during the following steps.

As for the chain transfer agent, a chain transfer agent which can be used for the above, RAFT method and has one leaving group is sufficient, and it can be suitably selected depending on the purpose.

Examples of the chain transfer agent include a thiocarbonylthio compound. Examples of the thiocarbonylthio compound include dithioester, dithiocarbamate, trithiocarboante, and xanthate.

The polymerization initiator used for each step includes an azo polymerization initiator, a peroxide polymerization initiator, and a persulfate polymerization initiator. Examples of the azo polymerization initiator include dimethyl azobis(isobutyric acid), 4,4'-azobis (4-cyanovaleric acid), and 2,2'-azobis(2-methylbutyronitrile). Examples of the peroxide polymerization initiator include benzoyl peroxide. Examples of the persulfate polymerization initiator include potassium persulfate and ammonium persulfate.

Examples of the solvent which may be used for each step include water, an alcohol solvent, a hydrocarbon solvent, a ketone solvent, an ester solvent, a chloride solvent, an aromatic solvent, and an aprotic polar solvent. From the viewpoint of safety and environmental toxicity, water is preferable. As for the solvent, a solvent having a boiling point which is higher than the radical generation temperature of the above polymerization initiator is preferable.

The solvent used for each step may be different, but considering the efforts required for changing the solvent, it is preferably a single solvent.

The polymerization temperature for each step is 50 to 100°C, for example.

The polymerization time for each step is 30 minutes to 24 hours, for example.

It is preferable that any of those steps be performed in an inert atmosphere. Examples of the inert atmosphere include argon and nitrogen.

The polymer Y obtained by the production method described above can be easily handled after it is collected from a solvent followed by drying.

### <Resin Composition>

### [First Embodiment]

The resin composition of the first embodiment of the present invention contains, in 100% by mass of the resin composition, 5% by mass or more and 65% by mass or less of the polymer X and 35% by mass or more and 95% by mass or less of the polymer Y

When the content ratio of the polymer X is 5% by mass or more, the effect of improving the polymer V like fluidity is exhibited. The fluidity is quantified as a melt mass flow rate which is defined by JIS K 7210, for example. In the present specification, if there is a change of 4 g/10 minutes or more when the measurement is carried out at the same conditions, for example, temperature of 220°C and a load of 5 kg, it is determined to have a sufficient improving effect. According to the resin composition of the first embodiment of the present invention, the melt mass flow rate easily has a discrepancy of 4 g/10 minutes or more compared to melt mass flow rate of a resin composition which consists of 100% by mass of the polymer Y.

Furthermore, when the content ratio of the polymer X is 65% by mass or less, excellent transparency is obtained. Excellent transparency means that at least one of the following condition (i) and condition (ii) is satisfied.
Condition (i): total light transmittance is 65% or more when a molded body is prepared to have a thickness of 3 mm
Condition (ii): haze is 10% or less when a molded body is prepared to have a thickness of 400 µm.

When the content ratio of the polymer Y is 35% by mass or more, transparency is excellent to that it is easy to have total light transmittance, is 65% or more when a molded body is prepared to have a thickness of 3 mm. Furthermore, when the content ratio of the polymer Y is 95% by mass or less, fluidity or the like is improved as the polymer X functions as a modifying agent for the polymer Y.

From the viewpoint having both high crystallinity and high transparency, the content ratio of the polymer X is preferably 15% by mass or more and 55% by mass or less, and more preferably 35% by mass or more and 50% by mass or less. The content ratio of the polymer Y is preferably 45% by mass or more and 85% by mass or less, and more preferably 50% by mass or more and 65% by mass or less.

The crystallinity can be determined based on crystal fusion enthalpy which is observed by differential scanning calorimetric analysis of a molded body obtained by molding a resin composition. In the case of a polymer blend, it generally has a value which is lower than the value calculated from the mass ratio contained in the resin composition and crystal fusion enthalpy of a crystalline resin alone.

However, according to the resin composition of the present invention, surprisingly, the value calculated from the mass ratio of the polymer X and crystal fusion enthalpy of the polymer X alone is equivalent. As described herein, the equivalent means that the crystal fusion enthalpy value is not decreased by 10% or more compared to the calculated value.

The resin composition of the first embodiment easily has 10 J/g or more and 35 J/g or less of the crystal fusion enthalpy value that is measured by differential scanning calorimeter, and it has excellent crystallinity.

The crystallinity can be also determined by observing the presence or absence of a crystallization peak when a molded body obtained by molding a resin composition is cooled by a differential scanning calorimeter. If the crystallization peak is observed when cooling is performed from 200°C to 30°C at a temperature, lowering rate of 10°C/minute using a differential scanning calorimeter, it indicates easy crystallization.

The resin composition of the first embodiment is easily observed with a crystallization peak when cooling is performed from 200°C to 30°C at a temperature lowering rate of 10°C/minute using a differential scanning calorimeter, and thus it has excellent crystallinity.

In general, a resin composition exhibiting crystallinity has a larger crystal size than visible light, and thus it is easily non-transparent. Due to crystal micronization effect, the resin composition according to the first embodiment of the present invention exhibits transparency, and the crystallinity is obtained. Namely, according to the first embodiment of the present invention, a transparent material provided with properties of a crystalline resin can be achieved.

Herein, the "properties of a crystalline resin" means heat resistance, chemical resistance, low water absorption property, or the like, for example. Furthermore, examples of the properties that may be given to the polymer X include flame retardancy and weather resistance in addition to above.

Furthermore, within a range in which the optical performance or mechanical properties are not deteriorated, the resin composition may contain an additive, if necessary. The amount of additive is preferably as low as possible, and relative to 100 parts by mass of the total of the polymer X and the polymer Y, it is preferably 20 parts by mass or less, more preferably 10 parts by mass or less, and even more preferably 5 parts by mass or less.

Examples of the additive include a UV absorbing agent, a photostabilizer, a heat stabilizer, a blocking inhibitor like synthetic silica and silicone resin powder, a plasticizer, an anti-microbial agent, an anti-mold agent, a blueing agent, and an anti-static agent.

Examples of the UV absorbing agent include a benzoate compound, a benzophenone compound, a benzotriazole compound, a triazine compound, a salicylate compound, an acrylonitrile compound, a metal complex compound, a hindered amine compound; and inorganic particles such as ultrafine titan oxide with particle diameter of 0.01 to 0.06 µm or so or ultrafine zinc oxide with particle diameter of 0.01 to 0.04 µm. It may be used either singly or in combination of two or more types of them.

Examples of the photostabilizer include a hindered amine type or a phenol type photostabilizer like N-H type, N-CH₃ type, N-acyl type, and N-OR type.

Examples of the heat stabilizer include a phenol-based, an amine-based, a sulfur-based, and a phosphate-based oxidation inhibitor.

As a UV absorbing agent or an anti-oxidizing agent, a polymer type agent having the aforementioned UV absorbing agent or anti-oxidizing agent chemically bonded to a main chain or a side chain for forming a polymer can be also used.

The resin composition is prepared by adding the polymer X, the polymer Y, and if necessary, the aforementioned additive in a predetermined amount and kneading them with a common kneader such as a roll, a banburry mixer, a monoaxial extruder, or a biaxial extruder. In general, it is preferable to prepare it in pellet shape.

According to blending of the polymer X (crystalline resin) with the polymer Y (non-crystalline resin) in a specific amount, physical properties of the resin composition of the first embodiment of the present invention can be conveniently controlled, and it can have excellent physical properties such as fluidity. The resin composition of the first embodiment of the present invention has crystallinity and high transparency, and thus a molded body having high crystallinity and high transparency can be conveniently obtained at low cost by various molding methods.

### [Second embodiment]

The resin composition of the second embodiment of the present invention contains, in 100% by mass of the resin composition, more than 65% by mass but 85% by mass or less of the polymer X and 15% by mass or more but less than 35% by mass of the polymer Y, in which the domain (y1) or the domain (y2) comprises a macromonomer unit. As described above, it is preferable that the domain (y1) comprises a macromonomer unit, and it is more preferable that the macromonomer unit comprises a methyl methacrylate unit.

When the content ratio of the polymer X is more than 65% by mass, the crystallization progresses rapidly. Furthermore, when the content ratio of the polymer X is 85% by mass or less, the resin composition has higher impact resistance compared to a case in which the polymer X is blended with a homopolymer instead of the polymer Y.

When the content ratio of the polymer Y is 15% by mass or more, the resin composition has higher impact resistance compared to a case in which the polymer X is blended with a homopolymer instead of the polymer Y. Furthermore, when the content ratio of the polymer Y is less than 35% by mass, the crystallization progresses rapidly.

Speed of the crystallization can be determined based on the value of crystallization peak temperature which is observed at the time of cooling, by a differential scanning calorimeter, a molded body formed by molding the resin composition. Higher peak top temperature represents faster crystallization. Faster crystallization enables easier molding processing even with a resin composition with low Tg. The crystallization peak temperature is preferably 125°C or higher, more preferably 130°C or higher, and even more preferably 135°C or higher.

The resin composition of the second embodiment is easily observed with crystallization peak at 125°C or higher when cooling is performed from 200°C to 30°C at a temperature lowering rate of 10°C/minute by using a differential scanning calorimeter.

Meanwhile, the resin composition may contain an additive, if necessary, within a range in which the mechanical properties are not deteriorated. The amount of additive is preferably as low as possible, and relative to 100 parts by mass of the total of the polymer X and the polymer Y, it is preferably 20 parts by mass or less, more preferably 10 parts by mass or less, and even more preferably 5 parts by mass or less.

Examples of the additive are the same as the additive described above for the first embodiment.

The resin composition is prepared by adding the polymer X, the polymer Y, and if necessary, the aforementioned additive in a predetermined amount and kneading them with a common kneader such as a roll, a banburry mixer, a monoaxial extruder, or a biaxial extruder. In general, it is preferable to prepare it in pellet shape.

According to blending of the polymer X (crystalline resin) with the polymer Y (non-crystalline resin) in specific amount, physical properties of the resin composition of the second embodiment of the present invention can be conveniently controlled, and the composition becomes to have excellent physical properties such as fluidity. Furthermore, the resin composition of the second embodiment of the present invention has fast crystallization rate and micronized crystals so that excellent dynamic properties like impact resistance are exhibited. Thus, a molded body having excellent dynamic properties like impact resistance can be conveniently obtained at low cost by various molding methods.

### <Molded Body>

The molded body of the present invention is obtained by molding the resin composition of the first embodiment or the resin composition of the second embodiment.

Examples of a method for processing the resin composition include injection molding, calender molding, blow molding, extrusion molding, press molding, heat molding, and melt spinning.

Examples of the molded body obtained by using the resin composition include an injection molding article, a sheet, a film, a hollow molded body, a pipe, a square bar, a profile extrusion product, a thermal molding product, and a fiber.

When the resin composition of the first embodiment of the present invention is used, the resin composition can easily have transparency due to non-crystallinity or crystal micronization, regardless of the molding method. With higher transparency, it has a broader range of application to a transparent material such as thick film or sheet.

The molded body obtained by molding the resin composition of the first embodiment of the present invention satisfies at least one of the following condition (i) and condition (ii).

Condition (i): total light transmittance is 65% or more when a molded body is prepared to have a thickness of 3 mm.

Condition (ii); haze is 10% or less when a molded body is prepared to have a thickness of 400 µm.

When the total light transmittance of a molded body with a thickness of 3 mm is 65% or more, sufficient transparent feeling is obtained even with a thick film or sheet. The total light transmittance of molded body with a thickness of 3 mm is preferably 70% or more, more preferably 75% or more, and even more preferably 80% or more.

When the haze of a molded body with a thickness of 400 µm is 10% or less, transparency with less turbidity a is obtained even with a film. The haze of a molded body with a thickness of 400 µm is preferably 8% or less, more preferably 7% or less, and even more preferably 6% or less.

Furthermore, the molded body obtained by molding the resin composition of the first embodiment or the resin composition of the second embodiment of the present invention preferably has a crystallization peak which is observed at the time of cooling by a differential scanning calorimeter. Specifically, it is preferable that the crystallization peak be observed when cooling is performed from 200°C to 30°C at a temperature lowering rate of 10°C/minute by using a differential scanning calorimeter.
In particular, in the case of a molded body obtained by molding the resin composition of the second embodiment of the present invention, it is preferable that the crystallization peak be observed at 125°C or higher when cooling is performed from 200°C to 30°C at a temperature lowering rate of 10°C/minute by using a differential scanning calorimeter.

In a molded body with crystalline property, fine crystals are expanded according to heating or a change over time if the crystalline property is low. Accordingly, the molded body may easily experience a whitening problem. In addition, the impact resistance or the like may be impaired if the crystallinity is excessively high. As such, regarding the crystallinity of a molded body, the crystal fusion enthalpy is preferably in the range of 10 J/g or more and 35 J/g or less when measurement is made by using a differential scanning calorimeter. If the crystal fusion enthalpy is within the above range, the molded body is not likely to experience anneal whitening and it has excellent impact resistance.

From the viewpoint of preventing the anneal whitening, the crystal fusion enthalpy is preferably 13 J/g or more and 35 J/g or less, and more preferably 16 J/g or more any 35 J/g of less.

The molded body obtained by molding the resin composition of the first embodiment or the resin composition of the second embodiment of the present invention is useful in that it can be produced conveniently at relatively low cost and has excellent chemical properties.

### EXAMPLES

Hereinbelow, the present invention is described by way of the Examples. However, the present invention is not to be limited thereto.

Meanwhile, "parts" and "%" in Examples indicate "part by mass" and "% by mass", respectively.

### [Evaluation method]

Each evaluation made in Examples and Comparative Examples was performed according to the following method.

### (Method for Evaluating Resin Composition)

### (1) Measurement of Molecular Weight and Molecular Weight Distribution

The mass average molecular weight (Mw) and number average molecular weight (Mn) were measured by using gel permeation chromatography (GPC) (trade name: HLC-8220, manufactured by TOSOH CORPORATION) under the following conditions.
- Column: TSK GUARD COLUMN SUPER HZ-L (4.6 x 35 mm) and two TSK-GEL SUPER HZM-N (6.0 x 150 mm) are connected in series
- Eluent: THF
- measuring temperature: 40°C
- Flow rate: 0.6 mL/minute

Incidentally, the Mw and Mn were determined using a calibration curve established by using polymethyl methacrylate manufactured by Polymer Laboratories Ltd. (four kinds of Mp (peak top molecular weight) of 141,500, 55,600, 10,290 and 1,590).

### (2) Melt Mass Flow Rate

According to JIS K 7210, a sample was filled in a cylinder maintained at 220°C. After keeping it for 3 minutes, a load of 5 kg was applied and the extruded sample was collected and weighed to measure the melt mass flow rate (MFR). The measurement was repeated 3 times, and the average value was obtained.

### (Method for Evaluating Molded Body)

### (3) Measurement of total light transmittance and haze

By using a haze meter (manufactured by NIPPON DENSHOKU INDUSTRIES Co., LTD, trade name: NDH2000), the total light transmittance (TT) and haze (HZ) were measured according to JIS K 7105. Measurement was performed at three points for 1 sample, and the average value was obtained.

### (4) Measurement of Crystal Fusion Enthalpy and Crystallization Peak

By using a differential scanning calorimeter (manufactured by SII Nanotechnology (currently, Hitachi High-Tech Science Corporation), trade name: DSC6200), crystal fusion enthalpy of a resin composition was measured according to JIS K 7121. By carving off a small piece from a lump or a molded body of the resin composition, a sample for measurement was prepared.

The crystal fusion enthalpy was calculated from the area of crystal fusion peak which is measured during the 1^{st} temperature increasing process by which the temperature is increased from 30°C to 200°C at temperature increasing rate of 10°C/minute.

As for the temperature of crystallization peak (that is, crystallization temperature), a peak top value which is exhibited during the process of decreasing the temperature from 200°C to 30°C at temperature decreasing rate of 10°C/minute was used.

### (5) Microscopy Measurement

A specimen carved off from the molded body was set on a hot plate (manufactured by Linkam, trade name: TH-600PM), and then dissolved by increasing the temperature to 200°C at temperature increasing rate of 90°C/minute. After that, the process of decreasing the temperature to 30°C at temperature decreasing rate of 10°C/minute was observed under a polarization microscope (manufactured by Nikon Corporation, trade name: ECLIPSE E600 POL) with magnification of 100 times. Then, by using a digital camera for microscope (manufactured by Nikon Corporation, trade name: DIGITAL SIGHT DS-L1), an image was obtained.

### (6) Dynamic Viscoelasticity Test

By using a dynamic viscoelasticity measurement device (manufactured by Hitachi High-Tech Science Corporation, trade name: DMS6100), storage elasticity, loss elasticity, and a change in loss tangent (tanδ) of a sample were measured from -80°C to 180°C. The sample was prepared using a Charpy test specimen (without any notch), which has been obtained by injection molding. Under nitrogen atmosphere (200 mL/minute), the temperature increasing rate was set at 2°C/minute. The information was obtained at a frequency of 0.1 Hz.

### (7) Tensile Test

By using a dumbbell type test specimen which has been obtained by injection molding, the tensile test was performed by using a TENSILON universal material testing instrument (manufactured by ORIENTEC Co., LTD, trade name: RTC-1250A) according to JIS K 6251. The tensile test was performed at room temperature of 23°C and tensile rate of 20 mm/minute. From the stress strain curve at that time, elongation at break and tensile modulus were obtained.

### (8) Charpy Impact Test

By using a Charpy test specimen (with notch) which has been produced by injection molding, Charpy impact strength (that is, Charpy impact test value) was measured with a Charpy impact tester (manufactured by TOYO SEIKI Co., Ltd., trade name: DG-CP). Test was performed 5 times using a weight of 15 J, and the average value was obtained. Meanwhile, if there is no break even after the Charpy impact test, it was described as "NB."

### (9) Anneal Whitening Resistance

An injected molded specimen was arranged on a metal vassel. In a diaphragm pump type vacuum dryer adjusted to 125°C (manufactured by TOKYO RIKAKIKAI Co., Ltd., trade name: VOS-301 SD), the metal vessel itself was placed, and annealing was performed by heating for 4 hours. After 4 hours, the specimen was removed and cooled for one day at room temperature. Then, total light transmittance and haze were performed in the same manner as above (3), and a difference compared to the total light transmittance and haze before annealing was obtained (that is, value before annealing - value after annealing).

### <Preparation Example 1>

### [Preparation of Dispersant]

To a reaction vessel with volume of 1200 L which is equipped with a stirrer, a condenser, and a thermometer, 61.6 parts of 17% aqueous solution of potassium hydroxide, 19.1 parts of methyl methacrylate (manufactured by Mitsubishi Rayon Co., Ltd.), and 19.3 parts of deionized water were added. Subsequently, the liquid inside the reaction apparatus was stirred at room temperature, and after confirming the exothermic peak, it was additionally stirred for 4 hours. After that, the reaction solution inside the reaction apparatus was cooled to obtain an aqueous solution of potassium methacrylate.

Subsequently, to a reaction vessel with volume of 1050 L which is equipped with a stirrer, a condenser, and a thermometer, 900 parts of deionized water, 60 parts of sodium 2-(methacryloyloxy)ethane sulfonate (manufactured by Mitsubishi Rayon Co., Ltd., trade name: Acryester SEM-Na), 10 parts of the above aqueous solution of potassium methacrylate, and 12 parts of methyl methacrylate were added and stirred. The temperature was increased to 50°C while substituting the inside of the polymerization apparatus with nitrogen. To the inside, 0.08 part of 2,2'-azobis(2-methylpropionamidine) dihydrochloride (manufactured by Wako Pure Chemical Industries, Ltd., trade name: V-50) was added as a polymerization initiator, and the temperature was increased again to 60°C. After increasing the temperature, methyl methacrylate was added continuously for 75 minutes at rate of 0.24 part/minute by using a dropping pump. After being maintained for 6 hours at 60°C, the reaction solution was cooled to room temperature so that a dispersant having solid content of 10% was obtained as a transparent aqueous solution.

### <Preparation Example 2>

### [Macromonomer]

### (Synthesis of Cobalt Complex)

To a synthesis apparatus equipped with a stirrer, 2.00 g (8.03 mmol) of cobalt (II) acetate tetrahydrate (manufactured by Wako Pure Chemical Industries, Ltd., Wako Special grade), 3.86 g (16.1 mmol) of diphenylglyoxime (manufactured by Tokyo Chemical Industry Co., Ltd., EP grade), and 100 ml of diethyl ether, which has been deoxygenized in advance by nitrogen bubbling, were added under nitrogen atmosphere, and stirred for 2 hours at room temperature.

Subsequently, 20 ml of diethyl ether boron trifluoride complex (manufactured by Tokyo Chemical Industry Co., Ltd., EP grade) was added and additionally stirred for 6 hours. The resultant was filtered, and the solid was washed with diethyl ether and vacuum-dried for 12 hours. Accordingly, the cobalt complex was obtained as bright brown solid in an amount of 5.02 g (7.93 mmol, yield: 99%).

### (Synthesis of Macromonomer)

To a polymerization apparatus equipped with a stirrer, a condenser, and a thermometer, 145 parts of deionized water, 0.1 part of sodium sulfate (Na₂SO₄), and 0.26 part of the dispersant which has been prepared in Preparation example 1 (solid content: 10%) were added and stirred to give a homogeneous aqueous solution. Next, 95 parts of methyl methacrylate, 5 parts of methyl acrylate (MA) (manufactured by Mitsubishi Chemical Corporation, trade name: Methyl acrylate), 0.0016 part of the cobalt complex which has been prepared by the above method, and 0.1 part of 1,1,3,3-tetramethylbutylperoxy-2-ethylhexanoate (manufactured by NOF CORPORATION, trade name: Perocta O) as a polymerization initiator were added thereto to give an aqueous dispersion. Subsequently, the inside of the polymerization apparatus was sufficiently substituted with nitrogen and the aqueous dispersion was heated to 80°C and maintained for 4 hours. Then, it was heated to 92°C and maintained for 2 hours. After that, the reaction solution was cooled to 40°C to give an aqueous suspension of macromonomer. This aqueous suspension was filtered through a filtering cloth, and the filtrate was washed with deionized water and dried for 16 hours at 40°C. Accordingly, the macromonomer represented by the following general formula (1) was obtained. As a result of the analysis by GPC, the macromonomer was found to have Mw of 30000 and Mn of 16100. The results are shown in Table 1.

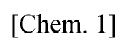

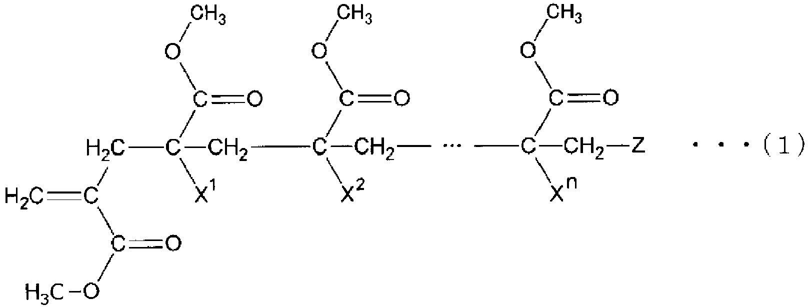

In the above general formula (1), X¹ to Xⁿ each independently represent a hydrogen atom or a methyl group. n is a natural number of from 2 to 10,000. Z is a terminal group. Furthermore, "..." in the formula indicates a state in which monomer units are polymerized.

Herein, the terminal group is a hydrogen atom or a group derived from a radical polymerization initiator, like the terminal group of a polymer which is obtained by known polymerization reaction.

**[Table 1]**

| | Composition | | Molecular weight | |
|---|---|---|---|---|
| | MMA | MA | Mw | Mn |
| Macromonomer | 95 | 5 | 30000 | 16100 |

### <Preparation Example 3>

### [Preparation of Copolymer (Y-1)]

By mixing 145 parts of deionized water, 0.1 part of sodium sulfate, and 0.26 part of the dispersant which has been prepared in Preparation example 1, an aqueous dispersion medium for suspension was prepared.

To a separable flask equipped with a condenser, 40 parts of the macromomoner (hereinbelow, described as "MM"), which has been synthesized in Preparation example 2, as a monomer for forming the domain (y1) compatible with the polymer X, 48 parts of n-butyl acrylate (BA) (manufactured by Mitsubishi Chemical Corporation) as a monomer for forming the domain (y2) incompatible with the polymer X, and 12 parts of methyl methacrylate were heated to 50°C under stirring to obtain a raw material syrup. After cooling the raw material syrup to 40°C, 0.3 part of 2,2'-azobis (2-methylbutyronitrile) (manufactured by Otsuka Chemical Co., Ltd., trade name: AMBN) was dissolved in the raw material syrup to give a syrup.

Subsequently, the aqueous dispersion medium for suspension was added to the syrup, and by increasing the stirring rotation number under substitution of an atmosphere within a separable flask with nitrogen by nitrogen bubbling, a syrup dispersion was obtained.

Temperature of the syrup dispersion was increased to 75°C, and the external temperature of the separable flask was maintained till to have a polymerization exothermic peak. After having the polymerization exothermic peak, temperature of the syrup dispersion was increased to 85°C when the syrup dispersion is at 75°C. By maintaining it for 30 minutes, the polymerization was terminated to obtain a suspension.

After cooling the suspension to 40°C or lower, the suspension was filtered through a filtering cloth. The filtrate was washed with deionized water and dried for 16 hours at 40°C to obtain the copolymer (Y-1). The copolymer (Y-1) was subjected to GPC analysis, but it was not dissolved in a solvent. Thus, the molecular weight and molecular weight distribution cannot be measured by gel permeation chromatography. The results are shown in Table 2.

### <Preparation Example 4>

### [Copolymer (Y-2)]

The copolymer (Y-2) was obtained in the same manner as Preparation example 3 except that 36 parts of n-butyl acrylate (BA) (manufactured by Mitsubishi Chemical Corporation) and 24 parts of methyl methacrylate were used as a monomer for forming the incompatible domain (y2). As a result of the analysis by GPC, it was found that the copolymer (Y-2) has Mw of 1294000, Mn of 75000, and molecular weight distribution (PDI) of 17.1. The results are shown in Table 2.

**[Table 2]**

| | Composition | | | Molecular weight | |
|---|---|---|---|---|---|
| | Compatible domain (y1) | Incompatible domain (y2) | | Mw | Mn |
| | MM | MMA | BA | | |
| Copolymer (Y-1) | 40 | 12 | 48 | unmeasurable | unmeasurable |
| Copolymer (Y-2) | 40 | 24 | 36 | 1294000 | 75000 |

### <Preparation Example 5>

### [Chain Transfer Agent: Synthesis of Polyethylene Glycol (PEG)-RAFT]

In view of the examples of WO 2011/093401 A, PEG-RAFT was synthesized as follows.

To a 200 mL round bottomed flask, 17.3 g (100 mmol) of 4-boromophenol, 0.01 g of p-toluene sulfonic acid monohydrate, and 100 ml of dichloromethane were added. After cooling to 0°C, 9.25 g (110 mmol) of dihydropyran (DHP) was added. After stirring for 3 hours, the reaction solution was concentrated and, according to purification by silica gel column chromatography, 21.3 g of 2-(4-bromophenoxy)tetrahydro-2H-pyran (precursor A) was obtained.

Subsequently, to a 500 mL four neck flask equipped with a condenser and a thermometer, 1.95 g (80 mmol) of magnesium, 100 mL of anhydrous tetrahydrofuran (THF), and 0.02 g of iodide were added. A dropping funnel added with 20.6 g (80 mmol) of the precursor A and another dropping funnel added with 14.2 g of bromoisobutyronitrile (purify of 92%, 88 mmol) were set on the four neck flask. After substituting the inside of the system with argon atmosphere, the precursor A was added dropwise, and a Grignard reagent was generated in the system.

Upon the completion of the dropwise addition, stirring was performed for 1 hour at to 40°C. 6.70 g (88 mmol) of carbon disulfide was added dropwise such that the internal temperature is not higher than 45°C. Upon the completion of the dropwise addition, it was kept for 1 hour at 38 to 40°C, and bromoisobutyronitrile was slowly added thereto. Upon the completion of the dropwise addition, the internal temperature was increased to 56°C, and stirring was performed for 72 hours. After 72 hours, ice water was added to the reaction solution, and THF was distilled off from the reaction solution under reduced pressure. Then, by adding 200 mL of diethyl ether, extraction was performed. The extract was dried over magnesium sulfate followed by concentration.

To the obtained crude product, 100 mL of THF was added. After cooling to °C 0.1 mL of 3.6% hydrochloric acid was added and stirred to deprotect tetrahydropyranyl ether. The reaction solution was neutralized with sodium carbonate followed by concentration. According to purification by silica gel column chromatography, 10.6 g of 2-cyanoprop-2-yl-(4-hydroxy)dithiobenzoate (precursor B) was obtained.

Separately, to a round bottomed flask equipped with a condenser, 45 g (60 mmol) of PEG monomethyl ether with Mn of 750, 20 g of pyridine, and 200 g of toluene were added. After further adding 30 g (300 mmol) of succinic anhydride, the reaction was allowed to occur for 72 hours at 80°C. After 72 hours, the reaction solution was cooled, and precipitated unreacted succinic anhydride was separated by filtration. The solvent was distilled off under reduced pressure, and by adding water to the residues, the insolubles were separated by filtration. By performing 3 times in total the operation of concentrating the filtrate under reduced pressure, adding water again, and concentration, toluene was added to the residues and the residual water was removed by azeotropic separation to have 50 g of crude succinic acid monomethoxy polyethylene glycol ester (precursor C).

1.13 g (4.7 mmol) of the precursor B and 4.00 g (4.7 mmol) of the precursor C were dissolved in 10 g of dichloromethane. After adding 1.1 g (5.3 mmol) of N,N'-dicyclohexylcarbodiimie and 0.1 g of N,N-dimethylaminopyridine, the reaction was allowed to occur for 48 hours at 50 to 55°C. After 48 hours, the reaction solution was cooled to room temperature, and the precipitated solid was separated by filtration. The filtrate was concentrated, and after adding a mixture solvent of n-hexane : diethyl ether = 1 : 1, it was stirred for 30 minutes. After allowing it stand for a while, the supernatant was decanted. The residues were concentrated under reduced pressure to obtain 4.7 g of PEG-RAFT.

### <Preparation Example 6>

### [Preparation of Triblock Polymer (Y-3)]

To a separable flask equipped with a condenser, a condenser, and a thermometer, 6.0 parts of non-ionic emulsifying agent (manufactured by Kao Corporation, trade name: Emulgen 147) and 120 parts of distilled water were added. Then, 0.12 part of PEG-RAFT which has been obtained in Preparation example 5, 0.3 part of potassium persulfate, and 1.0 part of hexadecane as a dispersion aid were added, and stirred for 30 minutes aft room temperature under nitrogen substitution. Subsequently, 10 parts of methyl methacrylate (MMA) which has been substituted in advance with nitrogen were added dropwise thereto, and heated to 50°C under stirring in nitrogen atmosphere. After sampling (that is, sampling 1) and confirming consumption of MMA by gas chromatography, 45 parts of butyl acrylate (BA) which has been substituted in advance with nitrogen was added dropwise thereto over 270 minutes. Upon the completion of the dropwise addition, it was further heated for 1 hour. After sampling (that is, sampling 2), consumption of BA was confirmed by gas chromatography. Finally, 10 parts of MMA which has been substituted in advance with nitrogen was added dropwise thereto over 60 minutes. Upon the completion of the dropwise addition, it was further heated for 1 hour. According to gas chromatography, consumption of MMA was confirmed. The reaction was then terminated to obtain the triblock polymer (Y-3).

As a result of the analysis by GPC, it was found that the triblock polymer (Y-3) has Mn of 51000 and Mw of 60000. Furthermore, from the GPC result of the sampling 1, it was found that the MMA block has Mw of 7500.

### <Preparation Example 7>

### [Triblock Polymer (Y-4)]

The triblock polymer (Y-4) was obtained in the same manner as Preparation example 6 except that the amount of MMA which is initially added is 15 parts, the amount of BA is 40 parts, and the amount of MMA which is lastly added is 15 parts.

As a result of the analysis by GPC, it was found that the triblock polymer (Y-4) has Mn of 50000 and Mw of 59000. Furthermore, from the GPC result of the sampling 1, it was found that the MMA block has Mw of 13000.

### <Example 1>

### [Preparation of Resin Composition]

10 parts of PVDF (manufactured by Arkema, trade name: Kynar 720) as the polymer X and 90 parts of the copolymer (Y-2), which has been prepared in Preparation example 4, as the polymer Y were pre-dried overnight at 80°C followed by dry blending. Then, by using a biaxial kneading extruder with φ30 mm (manufactured by Werner & Pfleiderer), extrusion was performed at maximum temperature of 220°C to obtain a molding material in pellet shape (that is, resin composition).

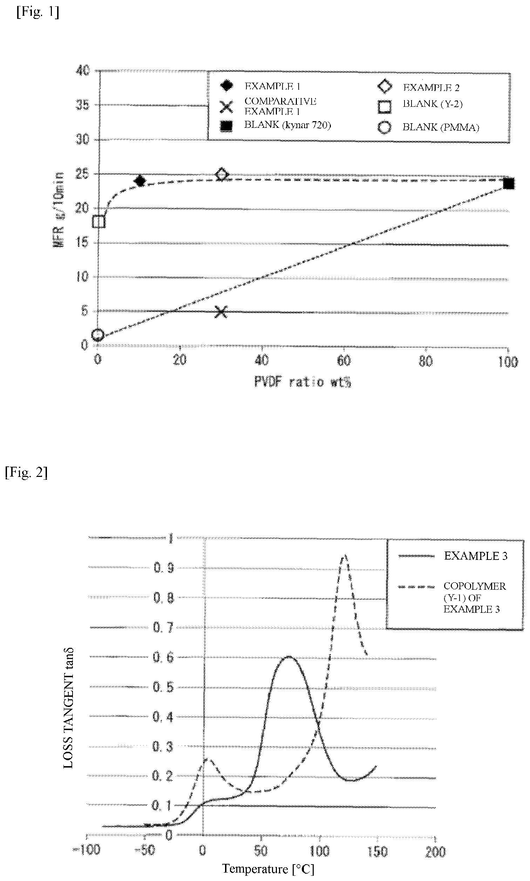

The melt mass flow rate (MFR) at 220°C of the obtained molding material in pellet shape was measured, and the result was compared with the measured value using the polymer X (Kynar 720) and the copolymer (Y-2) only. Furthermore, the crystal fusion enthalpy of a lump of the molding material (that is, resin composition) was measured. The results are shown in Table 3 and Fig. 1.

### <Example 2>

A molding material in pellet shape was prepared in the same manner as Example 1 except that the blending amount of PVDF is changed to 30 parts and the blending amount of the copolymer (Y-2) is changed to 70 parts.

The melt mass flow rate of the obtained molding material in pellet shape was measured, and the result was compared with the measured value using the polymer X and the copolymer (Y-2) only. Furthermore, the crystal fusion enthalpy of a lump of the molding material (that is, resin composition) was measured. The results are shown in Table 3 and Fig. 1.

### <Comparative Example 1>

A molding material in pellet shape was prepared in the same manner as Example 1 except that 70 parts of PMMA (manufactured by Mitsubishi Rayon Co., Ltd., trade name: ACRYPET VH001) is used in an amount of 70 parts instead of the copolymer (Y-2).

The melt mass flow rate of the obtained molding material in pellet shape was measured, and the result was compared with the measured value using the polymer X and PMMA only. Furthermore, the crystal fusion enthalpy of a lump of the molding material (that is, resin composition) was measured. The results are shown in Table 3 and Fig. 1.

**[Table 3]**

| | Resin composition | | | | | | | | | Fluidity | | | | Thermal analysis |
|---|---|---|---|---|---|---|---|---|---|---|---|---|---|---|
| | Polymer X | | Polymer Y | | | | | | | MFR at 220°C, load of 5 kg | | | | |
| | | | Type | Monomer for constituting the compatible domain (y1) | | Monomer for constituting the incompatible domain (y2) | | | | ① Resin composition | ② Polymer X | ③ Polymer Y | \|① - ③\| | Crystal fusion enthalpy |
| | Type | Parts by mass | | Type | Parts by mass | Type | Parts by mass | Type | Parts by mass | g/10 minutes | g/10 minutes | g/10 minutes | g/10 minutes | J/g |
| Example 1 | Kynar 720 | 10 | Y-2 | MM | 36 | MMA | 22 | BA | 32 | 24 | 24 | 18 | 6 | 0 |
| Example 2 | Kynar 720 | 30 | Y-2 | MM | 28 | MMA | 17 | BA | 25 | 25 | 24 | 18 | 7 | 9.4 |
| Comparative Example 1 | Kynar 720 | 30 | - | MMA | 70 | - | - | - | - | 5 | 24 | 1.5 | 3.5 | 0 |

As it is evident from Table 3 and Fig. 1, there was a great change in the fluidity if a small amount of the polymer X is added to the copolymer (Y-2) (Example 1 and Example 2). On the other hand, the commercially available blend of PMMA and PVDF shows an insufficient change in the fluidity.

As for the reason of having a great change in the fluidity in Example 1 and Example 2, it is believed that, although the polymer X is homogeneously dispersed due to the presence of a polymer chain for forming the compatible domain of the copolymer (Y-2), the polymer chain for forming the compatible domain is short and there is a polymer chain for forming the incompatible domain, and thus the intermolecular interaction is weak and the fluidity is improved even with the addition of a small amount.

Accordingly, it was shown that blending just a small amount of the polymer X with the copolymer (Y-2) allows convenient improvement of the physical properties.

### <Example 3>

### [Preparation of resin composition]

40 parts of PVDF (manufactured by Arkema, trade name: Kynar 720) as the polymer X and 60 parts of the copolymer (Y-1), which has been prepared in Preparation example 3, as the polymer Y were pre-dried overnight at 80°C followed by dry blending. Then, by using a biaxial kneading extruder with φ30 mm (manufactured by Werner & Pfleiderer), extrusion was performed at maximum temperature of 220°C to obtain a molding material in pellet shape (that is, resin composition).

### [Production of molded body]

By using the molding material which has been obtained by the above method, injection molding was performed with resin temperature of 220°C and mold temperature of 40°C using an injection molding machine (manufactured by TOSHIBA CORPORATION, trade name: IS100). As a result, a molded body with a thickness of 3 mm was obtained.

Crystal fusion enthalpy, total light transmittance (TT), haze (HZ), tensile modulus, elongation at break, and Charpy impact test value of the obtained molded body were measured. The results are shown in Table 4.

Dynamic viscoelasticity test was performed for the molded body which has been obtained in Example 3 and the molded body of the copolymer (Y-1) which has been obtained in Example 3. The loss tangent (tanδ) is shown in Fig. 2.

### <Comparative Example 2>

A molding material in pellet shape was prepared in the same manner as Example 3 except that only the copolymer (Y-1) which has been prepared in Preparation example 3 is used, and then a molded body was produced.

Crystal fusion enthalpy, total light transmittance, haze, tensile modulus, elongation at break, and Charpy impact test value of the obtained molded body were measured. The results are shown in Table 4.

### <Comparative Example 3>

A molding material in pellet shape was prepared in the same manner as Example 3 except that only the polymer X is used, and then a molded body was produced.

Crystal fusion enthalpy, total light transmittance, haze, tensile modulus, elongation at break, and Charpy impact test value of the obtained molded body were measured. The results are shown in Table 4.

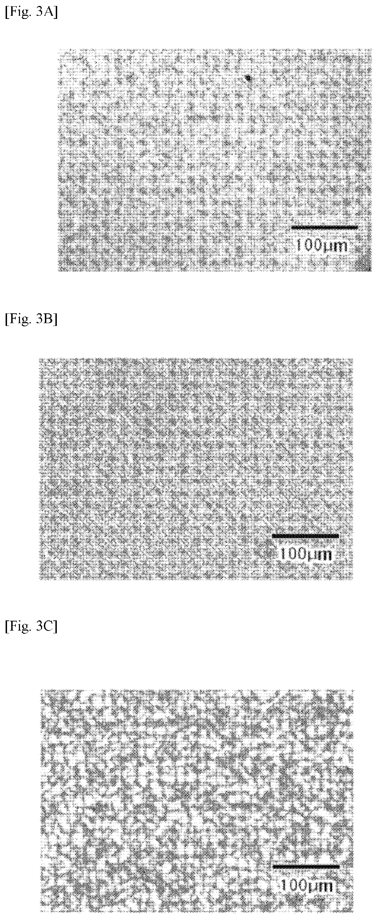

Furthermore, after melting first the obtained molded body followed by recrystallization, the crystal state was observed with a polarization microscope. The results are shown in Fig. 3C.

### <Examples 4 and 5 and Comparative Example 4>

A molding material in pellet shape was prepared in the same manner as Example 3 except that, as the polymer Y in resin composition, the copolymer (Y-2) which has been prepared in Preparation example 4 is used and the blending amount of the polymer X and the copolymer (Y-2) is modified to the values described in Table 4, and then a molded body was produced.

Crystal fusion enthalpy, total light transmittance, haze, tensile modulus, elongation at break, and Charpy impact test value of the obtained molded body were measured. The results are shown in Table 4.

Furthermore, after melting first the molded body obtained in Examples 4 and 5 followed by recrystallization, the crystal state was observed with a polarization microscope. The results are shown in Fig. 3A and Fig. 3B.

Furthermore, the molded body obtained in Examples 4 and 5 was evaluated in terms of anneal whitening resistance. The results are shown in Table 5.

### <Comparative Example 5>

A molding material in pellet shape was prepared in the same manner as Example 3 except that the blending amount of PVDF is changed to 50 parts and 50 parts of commercially available PMMA (manufactured by Mitsubishi Rayon Co., Ltd., trade name: ACRYPET VH001) is used instead of the copolymer (Y-2), and then a molded body was produced.

Crystal fusion enthalpy, total light transmittance, haze, tensile modulus, elongation at break, and Charpy impact test value of the obtained molded body were measured. The results are shown in Table 4.

Furthermore, the obtained molded body was evaluated in terms of anneal whitening resistance. The results are shown in Table 5.

**[Table 4]**

| | Resin composition | | | | | | | | | Evaluation result of molded body (3 mm) | | | | | |
|---|---|---|---|---|---|---|---|---|---|---|---|---|---|---|---|
| | Polymer X | | Polymer Y | | | | | | | Thermal analysis | Optical performance | | Mechanical test | | |
| | | | Type | Monomer for constituting the compatible domain (y1) | | Monomer for constituting the incompatible domain (y2) | | | | Crystal fusion enthalpy | TT | HZ | Tensile modulus | Elongation at break | Charpy impact test value |
| | Type | Parts by mass | | Type | Parts by mass | Type | Parts by mass | Type | Parts by mass | J/g | % | % | MPa | % | kJ/m² |
| Example 3 | Kynar 720 | 40 | Y-1 | MM | 24 | MMA | 7 | BA | 29 | 20.7 | 67 | 40 | 305 | 328 | NB |
| Comparative Example 2 | - | - | Y-1 | MM | 40 | MMA | 12 | BA | 48 | 0 | 87 | 63 | 40 | 56 | NB |
| Comparative Example 3 | Kynar 720 | 100 | - | - | - | - | - | - | - | 49.1 | 58 | 93 | 1605 | 10 | 9 |
| Example 4 | Kynar 720 | 40 | Y-2 | MM | 24 | MMA | 14 | BA | 22 | 17.1 | 80 | 31 | 600 | 195 | 13.6 |
| Example 5 | Kynar 720 | 50 | Y-2 | MM | 20 | MMA | 12 | BA | 18 | 23.6 | 72 | 82 | 893 | 216 | 8.5 |
| Comparative Example 4 | - | - | Y-2 | MM | 40 | MMA | 24 | BA | 36 | 0 | 91 | 6 | 349 | 99 | 3.1 |
| Comparative Example 5 | Kynar 720 | 50 | - | MMA | 50 | - | - | - | - | 8 | 92 | 1 | 1811 | 5 | 3.2 |

**[Table 5]**

| | Resin composition | | | | | | | | | Evaluation of molded body (3 mm) | |
|---|---|---|---|---|---|---|---|---|---|---|---|
| | Polymer X | | Polymer Y | | | | | | | Change in optical performance before and after annealing | |
| | | | Type | Monomer for constituting the compatible domain (y1) | | Monomer for constituting the incompatible domain (y2) | | | | TT | HZ |
| | Type | Parts by mass | | Type | Parts by mass | Type | Parts by mass | Type | Parts by mass | % | % |
| Example 4 | kynar 720 | 40 | Y-2 | MM | 24 | MMA | 14 | BA | 22 | -5 | 21 |
| Example 5 | kynar 720 | 50 | Y-2 | MM | 20 | MMA | 12 | BA | 18 | -5 | 8 |
| Comparative Example 5 | kynar 720 | 50 | - | MMA | 50 | | - | - | - | -43 | 91 |

As it is clearly shown in Table 4, the molded body obtained from each Example has excellent transparency and excellent mechanical properties.

On the other hand, the molded body of Comparative Example 2 in which the polymer X is not used exhibited significantly low tensile modulus or elongation at break.

The molded body of Comparative Example 3 in which the polymer Y is not used exhibited poor transparency. In addition, the elongation at break was significantly low.

The molded body of Comparative Example 4 in which the polymer X is not used exhibited significantly low elongation at break or Charpy impact test value.

When Example 5 is compared with Comparative Example 5, Comparative Example 5 in which PMMA is blended exhibited, even with the same addition amount of the polymer X, poor crystallization due to good compatibility of the polymer X and it had significantly low elongation at break or Charpy impact test value.

Furthermore, as it is clearly shown in Fig. 2, it was found that the copolymer (Y-1) has a domain which consists of peaks at high temperature side and a domain which consists of peaks at low temperature side. When PVDF as the polymer X is blended with the copolymer (Y-1), peaks at high temperature side has shifted while the position of the peaks at low temperature side remains the same. The domain with peaks at high temperature side is described as the compatible domain (y1) and the domain with peaks at low temperature side is described as the incompatible domain (y2).

Furthermore, as it is clearly shown in Fig. 3A to Fig. 3C, it was found that the globular crystal size is small with the composition of Examples 4 and 5 so that the difference in transparency compared to Comparative Example 3 is based on a difference in crystal size. Namely, it can be said that the resin composition of Examples 4 and 5 is a resin composition which exhibits transparency while having the crystallinity.

As it is clearly shown in Table 5, when optical performances of a molded body are compared before and after the annealing at 125°C for 4 hours, the difference in total light transmittance is 5% and the difference in haze is 21% or 8% in Examples 4 and 5. However, in the case of Comparative Example 5, the difference in total light transmittance is 43% and the difference in haze is 91%. Namely, the molded body of Comparative Example 5 has the total light transmittance which is reduced by 43% according to annealing, and it shows whitening with 91% increase in haze.

### <Example 6>

### [Preparation of Resin Composition]

40 parts of PVDF (manufactured by Arkema, trade name: Kynar 720) as the polymer X and 60 parts of the copolymer (Y-2), which has been prepared in Preparation example 4, as the polymer Y were pre-dried overnight at 60°C followed by dry blending. Then, by using LABO PLASTOMILL (manufactured by TOYO SEIKI Co., Ltd.) equipped with a biaxial kneading unit, it was kneaded for 10 minutes at temperature of 220°C and rotation number of 30 rpm to obtain a resin composition in bulk shape.

### [Production of molded body]

The resin composition which has been obtained by the above method was inserted to a polyethylene terephthalate (PET) film (manufactured by Toray Industries, Inc., trade name: Lumirror S10) and, after having it present between stainless steel (SUS) plates, it was pressed using a mini test press-10 type machine (manufactured by TOYO SEIKI Co., Ltd.) to prepare a molded body in film shape. The heating temperature was 200°C, and the press time was 5 minutes. After the heating, it was cooled naturally in air while it is inserted in SUS plate.

When the film thickness of the obtained molded body in film shape is measured, it was found to be 400 µm, and the total light transmittance and haze were measured and found to be 89% and 8%, respectively. Furthermore, according to the DSC measurement, the crystal fusion enthalpy was found to be 18.2 J/g. The results are shown in Table 6.

### <Examples 7 to 12>

The resin composition was prepared in the same manner as Example 6 except that the type of PVDF as the polymer X is modified to those described in Table 6, and then a molded body was produced.

Crystal fusion enthalpy, total light transmittance, and haze of the obtained molded body were measured. The results are shown in Table 6.

Meanwhile, trade names of Kynar 710, Kynar 740, and Kynar 760 indicate PVDF that is manufactured by Arkema, trade name of KF 850 indicates PVDF that is manufactured by KUREHA CORPORATION, and trade names of Solef 6008 and Solef 6010 indicate PVDF that is manufactured by Solvay Specialty Polymers.

### <Comparative Example 6>

The resin composition was prepared in the same manner as Example 6 except that the copolymer (Y-2) is not used, and then a molded body was produced.

Crystal fusion enthalpy, total light transmittance, and haze of the obtained molded body were measured. The results are shown in Table 6.

**[Table 6]**

| | Resin composition | | | | Evaluation of film (400 µm) | | |
|---|---|---|---|---|---|---|---|
| | Polymer X | | Polymer Y | | Thermal analysis | Optical performance | |
| | | | | | Crystal fusion enthalpy | TT | HZ |
| | Type | Parts by mass | Type | Parts by mass | J/g | % | % |
| Example 6 | Kynar 720 | 40 | Y-2 | 60 | 18.2 | 89 | 8 |
| Example 7 | Kynar 710 | 40 | Y-2 | 60 | 18.2 | 90 | 6 |
| Example 8 | Kynar 740 | 40 | Y-2 | 60 | 18.4 | 89 | 7 |
| Example 9 | Kynar 760 | 40 | Y-2 | 60 | 16.8 | 90 | 7 |
| Example 10 | KF850 | 40 | Y-2 | 60 | 23.6 | 89 | 6 |
| Example 11 | Solef 6008 | 40 | Y-2 | 60 | 21.0 | 89 | 7 |
| Example 12 | Solef 6010 | 40 | Y-2 | 60 | 24.5 | 92 | 5 |
| Comparative Example 6 | Kynar 720 | 100 | - | - | 46.4 | 94 | 69 |

As it is clearly shown in Table 6, the molded body obtained from each Example has high crystallinity and excellent transparency.

As shown in the above, even when the molded body has a film shape, the transparency is significantly improved in each Example due to the crystal micronization effect. It is also found that the same effect is obtained regardless of the type of the polymer X.

### <Example 13>

### [Preparation of Resin Composition]

70 parts of PVDF (manufactured by Arkema, trade name: Kynar 720) as the polymer X and 30 parts of the copolymer (Y-2), which has been prepared in Preparation example 4, as the polymer Y were pre-dried overnight at 80°C followed by dry blending. Then, by using a biaxial kneading extruder with φ30 mm (manufactured by Werner & Pfleiderer), extrusion was performed at maximum temperature of 220°C to obtain a molding material in pellet shape (that is, resin composition).

### [Production of molded body]

By using the molding material which has been obtained by the above method, injection molding was performed with resin temperature of 220°C and mold temperature of 40°C using an injection molding machine (manufactured by TOSHIBA CORPORATION, trade name: IS100). As a result, a molded body with a thickness of 3 mm was obtained.

Crystal fusion enthalpy, crystallization temperature, tensile modulus, elongation at break, Charpy impact test value, total light transmittance (TT), and haze (HZ) of the obtained molded body were measured. The results are shown in Table 7.

### <Comparative Example 7>

A resin composition was prepared in the same manner as Example 13 except that commercially available PMMA (manufactured by Mitsubishi Rayon Co., Ltd., trade name: ACRYPET VH001) is used instead of the copolymer (Y-2), and then a molded body was produced.

Crystal fusion enthalpy, crystallization temperature, tensile modulus, elongation at break, Charpy impact test value, total light transmittance, and haze of the obtained molded body were measured. The results are shown in Table 7.

Furthermore, the results of crystal fusion enthalpy, crystallization temperature, tensile modulus, elongation at break, Charpy impact test value, total light transmittance, and haze of the molded body which has been obtained from the above Comparative Examples 3 and 4 are also shown in Table 7.

**[Table 7]**

| | Resin composition | | | | | | | | | Evaluation result of molded body (3 mm) | | | | | | |
|---|---|---|---|---|---|---|---|---|---|---|---|---|---|---|---|---|
| | Polymer X | | Polymer Y | | | | | | | Thermal analysis | | Mechanical test | | | Optical performance | |
| | | | Type | Monomer for constituting the compatible domain (y1) | | Monomer for constituting the incompatible domain (y2) | | | | Crystal fusion enthalpy | Crystallization temperature | Tensile modulus | Elongation at break | Charpy impact test value | TT | HZ |
| | Type | Parts by mass | | Type | Parts by mass | Type | Parts by mass | Type | Parts by mass | J/g | °C | MPa | % | kJ/m² | % | % |
| Example 13 | Kynar 720 | 70 | Y-2 | MM | 12 | MMA | 7 | BA | 11 | 32.4 | 136 | 773 | 204 | 10.3 | 56 | 92 |
| Comparative Example 7 | Kynar 720 | 70 | - | MMA | 30 | - | - | - | - | 24.5 | 121 | 2129 | 11 | 3.1 | 73 | 90 |
| Comparative Example 4 | - | - | Y-2 | MM | 40 | MMA | 24 | BA | 36 | 0 | - | 349 | 99 | 3.1 | 91 | 6 |
| Comparative Example 3 | Kynar 720 | 100 | - | - | - | - | - | - | - | 49.1 | 141 | 1605 | 10 | 9 | 58 | 93 |

As it is evident from Table 7, it was found that blending PVDF with the copolymer (Y-2) (Example 13) allows higher crystal fusion enthalpy and higher crystallization temperature compared to the case of blending PVDF with PMMA (Comparative Example 7), thus exhibiting easier progress of crystallization.

Furthermore, both the elongation at break and Charpy impact test value were high in a case in which PVDF is blended with the copolymer (Y-2). In this regard, it is believed to be a result based on less instability against strain as the strain applied on polymer chain is reduced in accordance with crystal micronization.

Furthermore, when comparison is made with Comparative Example 4 in which only the copolymer (Y-2) is used, the molded body of Example 13 has high elongation at break and Charpy impact test value, indicating that it is not based on the influence of BA only.

Furthermore, from the results of Example 13 and Comparative Example 3 in which both elongation at break and Charpy impact test value are improved with regard to the polymer X, it was found that a strong property against strain is obtained in accordance with crystal micronization.

### <Example 14>

### [Preparation of Resin Composition]

40 parts of PVDF (manufactured by Arkema, trade name: Kynar 720) as the polymer X and 60 parts of the triblock polymer (Y-3), which has been prepared in Preparation example 6, as the polymer Y were pre-dried overnight at 60°C followed by dry blending. Then, by using LABO PLASTOMILL (manufactured by TOYO SEIKI Co., Ltd.) equipped with a biaxial kneading unit, it was kneaded for 10 minutes at temperature of 220°C and rotation number of 30 rpm to obtain a resin composition in bulk shape.

### [Production of molded body]

The resin composition which has been obtained by the above method was inserted to a polyethylene terephthalate (PET) film (manufactured by Toray Industries, Inc., trade name: Lumirror S10) and, after having it present between stainless steel (SUS) plates, it was pressed using a mini test press-10 type machine (manufactured by TOYO SEIKI Co., Ltd.) to prepare a molded body in film shape. The heating temperature was 200°C, and the press time was 5 minutes. After the heating, it was cooled naturally in air while it is inserted in SUS plate.

When the film thickness of the obtained molded body in film shape is measured, it was found to be 400 µm, and the total light transmittance and haze were measured and found to be 91% and 9%, respectively. Furthermore, according to the DSC measurement, it was found that the melting point is 166°C, the crystal fusion enthalpy is 19.8 J/g, and the crystallization temperature is 123°C. The results are shown in Table 8.

### <Example 15>

A molded body was produced in the same manner as Example 14 except that the triblock polymer (Y-4), which has been prepared in Preparation example 7, is used as the polymer Y, and then a molded body was produced.

When the film thickness of the obtained molded body in film shape is measured, it was found to be 400 µm, and the total light transmittance and haze were measured and found to be 93% and 3%, respectively. Furthermore, according to the DSC measurement, it was found that the melting point is 159°C, and the crystal fusion enthalpy is 16.5 J/g. The crystallization temperature was not observed. The results are shown in Table 8.

**[Table 8]**

| | Resin composition | | | | | DSC | | | Evaluation of film (400 µm) | |
|---|---|---|---|---|---|---|---|---|---|---|
| | Polymer X | | Polymer Y | | Mass average molecular weight of the domain (y1) | Melting point | Crystal fusion enthalpy | Crystallization temperature | TT | HZ |
| | Type | Parts by mass | Type | Parts by mass | | °C | J/g | °C | % | % |
| Example 14 | Kynar 720 | 40 | Y-3 | 60 | 7500 | 166 | 19.8 | 123 | 91 | 9 |
| Example 15 | Kynar 720 | 40 | Y-4 | 60 | 13000 | 159 | 16.5 | None | 93 | 3 |

As it is evident from Table 8, the molded body obtained from each Example has excellent transparency.

Meanwhile, in the case of Example 15, the crystal fusion enthalpy was observed but crystallization peak was not shown during the temperature lowering process. In this regard, it is believed that crystallization progresses during the measurement process using a differential scanning calorimeter and crystallization hardly occurs in film state. When the polymer Y is a triblock polymer, it was found that, if the mass average molecular weight of a polymer chain constituting the domain (y1) that is compatible with the polymer X is as high as 13000, the PVDF chain is slowly excluded from the compatible phase so that it is difficult to have crystallization.

As described above, by mixing the polymer X and the polymer Y at a pre-determined ratio, transparency, crystallinity, and mechanical properties can be obtained in good balance. Furthermore, as the crystallization occurs easily during molding, it has a property of not easily allowing anneal whitening.

Furthermore, by blending the polymer X and the polymer Y at a pre-determined ratio, physical properties of a resin composition like fluidity can be conveniently controlled.

Furthermore, by mixing the polymer X and the polymer Y at a pre-determined ratio, the crystallization rate can be conveniently controlled, and a resin composition with excellent mechanical properties like impact resistance can be obtained.

### INDUSTRIAL APPLICABILITY

The molded body obtained by molding the resin composition of the present invention is preferred as a sheet material such as an optical sheet, a film material such as a film for decoration and a film for agricultural use, a member for an automobile, a member for home appliances, a member for medical use, or a member for constructional use.

## Claims

1. A resin composition which contains 5% by mass or more and 65% by mass or less of a polymer X described below and 35% by mass or more and 95% by mass or less of a polymer Y described below.
Polymer X: a vinylidene fluoride resin
Polymer Y: a copolymer having a domain (y1) which is compatible with the polymer X and a domain (y2) which is incompatible with the polymer X

2. The resin composition according to claim 1, wherein melt mass flow rate measured at temperature of 220°C and a load of 5 kg has a discrepancy of 4 g/10 minutes or more compared to melt mass flow rate of a resin composition which consists of 100% by mass of the polymer Y

3. The resin composition according to claim 1, wherein a crystallization peak is observed when cooling is performed from 200°C to 30°C at a temperature lowering rate of 10°C/minute by using a differential scanning calorimeter.

4. The resin composition according to claim 1, wherein crystal fusion enthalpy measured by a differential scanning calorimeter is 10 J/g or more and 35 J/g or less.

5. The resin composition according to claim 1, wherein the polymer Y is a copolymer which contains 1% by mass or more and 50% by mass or less of the domain (y1).

6. The resin composition according to claim 1, wherein the domain (y1) or the domain (y2) comprises a macromonomer unit.

7. The resin composition according to claim 6, wherein the macromonomer unit comprises a methyl methacrylate unit.

8. A resin composition which contains more than 65% by mass but 85% by mass or less of a polymer X described below and 15% by mass or more but less than 35% by mass of a polymer Y described below, wherein a domain (y1) described below or a domain (y2) described below comprises a macromonomer unit.
Polymer X: a vinylidene fluoride resin
Polymer Y: a copolymer having a domain (y1) which is compatible with the polymer X and a domain (y2) which is incompatible with the polymer X

9. The resin composition according to claim 8, wherein a crystallization peak is observed at 125°C or higher when cooling is performed from 200°C at a temperature lowering rate of 10°C/minute by using a differential scanning calorimeter.

10. The resin composition according to claim 8, wherein the macromonomer unit comprises a methyl methacrylate unit.

11. The resin composition according to claim 1, wherein the polymer Y is a block polymer having the domain (y1) and the domain (y2).

12. The resin composition according to claim 11, wherein the domain (y1) consists of a methyl methacrylate unit.

13. The resin composition according to claim 11, wherein the mass average molecular weight of the domain (y1) is 12000 or less.

14. The resin composition according to claim 11, wherein the block polymer is an ABA triblock copolymer.

15. A molded body which is obtained by molding the resin composition described in any one of claims 1 to 7 and claims 11 to 14 and satisfies at least one of the following condition (i) and condition (ii).
Condition (i): total light transmittance is 65% or more when a molded body is prepared to have a thickness of 3 mm.
Condition (ii): haze is 10% or less when a molded body is prepared to have a thickness of 400 µm.

16. A molded body which is obtained by molding the resin composition described in any one of claims 8 to 10.
